# FASCICULE DE BREVET EUROPEEN

(11) **EP 1 949 515 B1**
(45) Date de publication et mention de la délivrance du brevet: **14.12.2011**
(21) Numéro de dépôt: 06820168.0
(22) Date de dépôt: 10.10.2006
(51) Int. Cl.: H02G 3/06, H01B 7/18

(54) **RACCORD COUDE POUR CABLE ELECTRIQUE MULTIFILS**
ELLBOGEN-VERBINDUNG FÜR EIN ELEKTRISCHES MEHRLEITUNGS-KABEL
ELBOW CONNECTION FOR MULTIPLE-WIRE ELECTRIC CABLE

(30) Priorité: 12.10.2005 FR 0510404
(43) Date de publication de la demande: 30.07.2008
(73) Titulaire: SNECMA, 75015 Paris (FR)
(72) Inventeur: FERRAGUT, Eric, Daniel, José, F-91590 d'Huisson-Longueville (FR); GOURY, Daniel, Henri, Mill Creek ,WA 98012 (US); LORAND, Anthony, Claude, Bernard, F-27200 Vernon (FR)
(74) Mandataire: Boura, Olivier
(86) Numéro de dépôt international: PCT/FR2006/002261
(87) Numéro de publication internationale: WO 2007/042654

(56) Documents cités:
- EP-A- 0 578 961
- EP-A- 0 711 007
- DE-U1- 9 218 768
- US-A- 4 857 674
- US-A- 5 132 488

## Description

La présente invention concerne le domaine des raccords de câble électrique à plusieurs fils électriques et celui des connecteurs de câbles électriques en général.

On connaît de multiples connecteurs de câble électrique et diverses dispositions de raccordement de câble électrique.

La présente demande vise à résoudre un problème souvent rencontré lors de la pose de câblages de puissance comprenant plusieurs fils d'alimentation de forte section dans des espaces restreints. Le problème est que les câblages doivent se plier à de brusques changements de direction, parfois immédiatement en sortie à l'arrière d'un connecteur, sans subir de détérioration.

On connaît des connecteurs de câble électrique comportant un raccord coudé comprenant un conduit tubulaire coudé, qui peut être constitué d'une ou deux coques. Pour des fils électriques de faible section, notamment inférieure à un millimètre carré, le conduit coudé peut être réalisé à partir de deux coques en matière plastique. Pour maintenir des câbles électriques d'alimentation de puissance contenant plusieurs fils de forte section, notamment supérieur au millimètre carré, on utilise des raccords coudés comprenant un conduit coudé en métal. Ces conduits métalliques peuvent faire partie d'une prise de raccordement mécanique et de connexion électrique. Le conduit protège contre les détériorations mécaniques d'origine extérieure (frottement, écrasement, cisaillement, chocs).

Ces raccords métalliques et ces connecteurs électriques ont pour inconvénients d'être particulièrement lourds, encombrants, coûteux et inadaptables, un type de raccord devant être choisi pour chaque angle de renvoi coudé désiré.

L'inconvénient de poids de ces raccords est préjudiciable en particulier pour les applications aéronautiques.

EP 0711 007 décrit un raccord coudé selon le préambule de la revendication 1.

Le but de l'invention est de pallier aux inconvénients des solutions actuelles et de réaliser un raccord de câble électrique de puissance multi-fils permettant de réorienter les fils du câble sans leur faire subir d'effort mécanique ni de détérioration, tout en permettant un câblage individuel et un raccordement aisé de chacun de ces fils.

Pour cela, il est prévu d'après l'invention un système de raccord coudé comprenant une pièce centrale, formant porteur ou raidisseur, ce porteur central étant formé d'un jonc flexible, notamment en silicone, de forme sensiblement cylindrique avant d'être coudé et comportant plusieurs rainures creusées à sa surface pour recevoir chacune un fil du câble électrique, le jonc contenant, insérée dans sa partie centrale, une tige rigide, notamment une tige métallique, pouvant être coudée de façon à ce que le porteur central forme un renvoi coudé et à imposer une orientation aux fils du câble électrique en sortie du raccord. Le raidisseur central muni des fils du câble électrique logés dans ses gorges peut avantageusement recevoir à une extrémité un élément cylindrique comportant plusieurs perçages pour passer les fils et les immobiliser, puis être revêtu d'une tresse de blindage, d'une ou de plusieurs couches de gainage et d'un manchon de gainage externe, notamment thermo-rétractable, et/ou être muni d'une bague ou encore d'une pièce de raccordement filetée et peut enfin former ou être intégré dans un connecteur ou une prise de connexion de câble électrique.

L'invention concerne un raccord coudé pour câble électrique à plusieurs fils, selon la revendication 1.

De préférence, la tige de renfort est une tige métallique rigide.

De préférence, le jonc est en matériau à base de silicone.

Il est prévu que le jonc est de géométrie sensiblement cylindrique suivant la direction longitudinale.

Plus précisément, il est prévu que le jonc est à section légèrement décroissante longitudinalement.

Selon des caractéristiques avantageuses, chaque gorge a une section transversale en arc de cercle de diamètre D. Chaque gorge présente, à la surface du jonc, une ouverture de largeur E inférieure au diamètre de la gorge D.

En outre, le raccord peut comprendre des éléments de maintien périphérique de fils dans lesdites gorges, en particulier, un ou plusieurs des éléments suivants pris isolément ou en combinaison :
- un élément cylindrique comportant plusieurs trous percés parallèlement à l'axe et correspondant, respectivement, au prolongement des gorges du jonc ou alternativement un barillet comportant plusieurs logements aménagés parallèlement à l'axe et correspondant, respectivement, au prolongement des gorges du jonc. De façon avantageuse, la partie axiale du barillet comporte un trou d'ancrage de la tige de renfort, notamment un trou fileté pour fixer une tige de renfort filetée ; et/ou,
- une bague annulaire de diamètre supérieur au jonc ; et/ou,
- au moins une tresse de blindage ; et/ou,
- au moins une couche de gainage périphérique, déposée sur les fils ; et/ou encore,
- un manchon de gainage externe.

Le gainage peut être thermo-rétractable.

Selon une caractéristique additionnelle, le raccord coudé comprend une pièce de raccordement mécanique.

L'invention concerne également un connecteur électrique muni d'un tel raccord coudé, en particulier un connecteur pour câble électrique à plusieurs fils, comprenant de telles pièces de raccord coudé et des moyens de raccordement ou de connexion électrique.

L'invention concerne encore un câble électrique et/ou un harnais de câblage électrique, comportant au moins un tel raccord coudé.

D'autres particularités ou avantages de l'invention apparaîtront clairement dans la suite de la description donnée à titre d'exemple non limitatif et faite en regard des figures annexées qui représentent :
La figure 1 est une vue de côté d'un porteur central rainuré de raccord coudé selon l'invention ;
la figure 2 est une vue d'ensemble complète d'un raccord coudé de câble électrique selon l'invention ;
la figure 3 est une autre vue de porteur central montrant le jonc rainuré dans lequel est inséré une tige de renfort avant insertion de fils de câble électrique pour former un raccord coudé selon l'invention ;
la figure 4 est une vue du raccord coudé de la figure 3 après insertion de fils de câble électrique dans le jonc rainuré et dans les trous d'un élément cylindrique rapporté, selon l'invention ;
la figure 5 est une vue du raccord coudé de la figure 4 inséré dans une bague ou une pièce de raccordement mécanique, selon l'invention ; et,
la figure 6 est une vue du raccord coudé de la figure 5 enserré dans un manchon de gainage, selon l'invention.

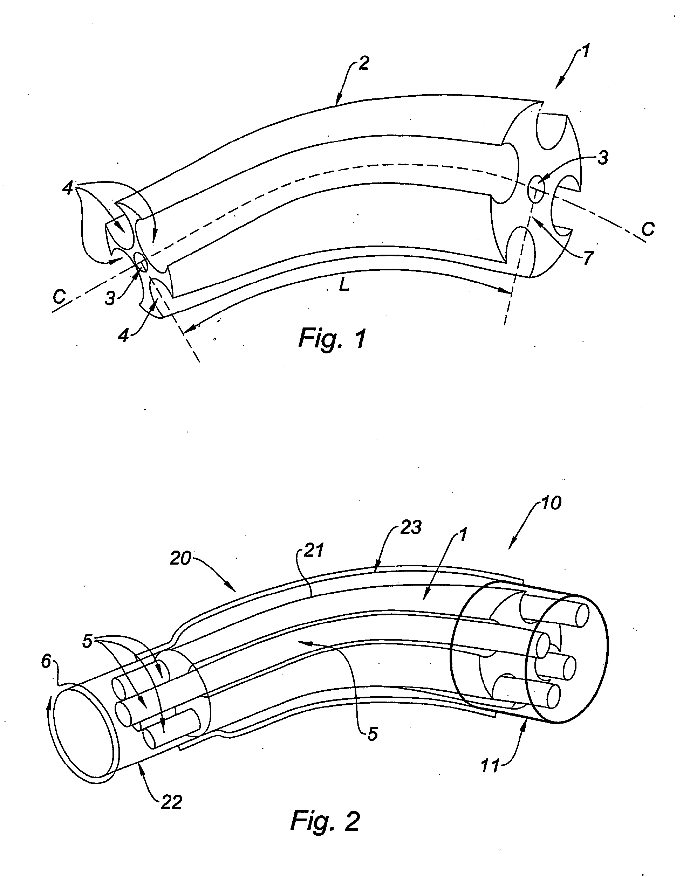

Sur la figure 1 est représenté une pièce rainurée 1 faisant fonction de 'porteur' ou de "raidisseur" et formant l'élément central d'un raccord coudé selon l'invention. Le porteur central 1 se compose d'un jonc rainuré 2 longitudinal d'axe C au coeur duquel est disposé une tige de renfort 3 axiale, le tout étant coudé pour donner sa forme au porteur central 1 et au raccord coudé.

Les gorges rainurées 4 du porteur central permettent de loger individuellement plusieurs fils 5 de câble électrique, ici au nombre de quatre, comme représenté sur la figure 2, afin de les immobiliser et de leur imposer une direction de renvoi coudé C conformément à l'invention.

La figure 2 montre ainsi que le porteur rainuré 1 de la figure 1 qui forme l'élément central d'un raccord coudé 10 selon l'invention, reçoit plusieurs fils électriques 5 logés dans les rainures 4 creusées à sa périphérie et que les fils électriques 5 sont immobilisés par des éléments de maintien.

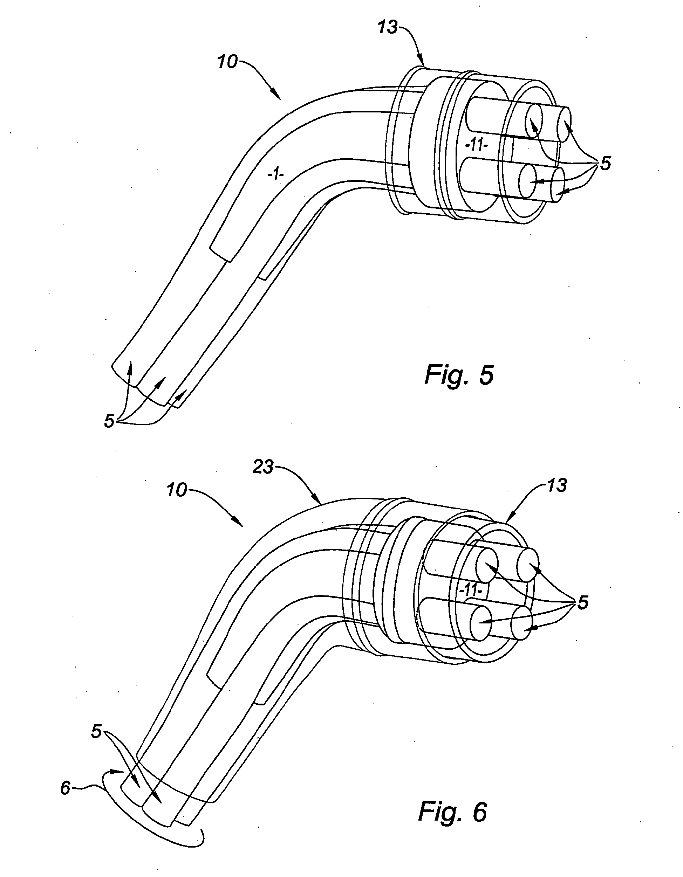

L'exemple de réalisation de la figure 2 montre que le raccord coudé 10 est muni d'un ensemble d'éléments de maintien optionnels, parmi lesquels on distingue :
- un barillet 11 ou élément cylindrique percé de trous 12, dans le prolongement des rainures 4 du porteur central 1, pour faire passer les fils électriques 5,
- des éléments de revêtement externe 20, tels que :
- une tresse de blindage 21 (simple ou surtressée),
- une ou plusieurs couches de gainage 22 périphérique déposéé (s) sur les fils 5, notamment sur le câble 6 en sortie 8 du raccord 10, des couches de gainage pouvant aussi couvrir tout ou partie du porteur central et/ou,
- un manchon de gainage 23, de préférence coulissant et thermorétractable, couvrant longitudinalement la partie de raccordement 13 et de préférence la longueur L du porteur central 1 ;
auxquels peut s'ajouter une bague (non représentée) ou une pièce de raccordement mécanique 13 visible sur la figure 5.

On peut ainsi obtenir finalement une prise complète de raccordement mécanique et/ou de connexion électrique comprenant un raccord coudé 10 selon l'invention.

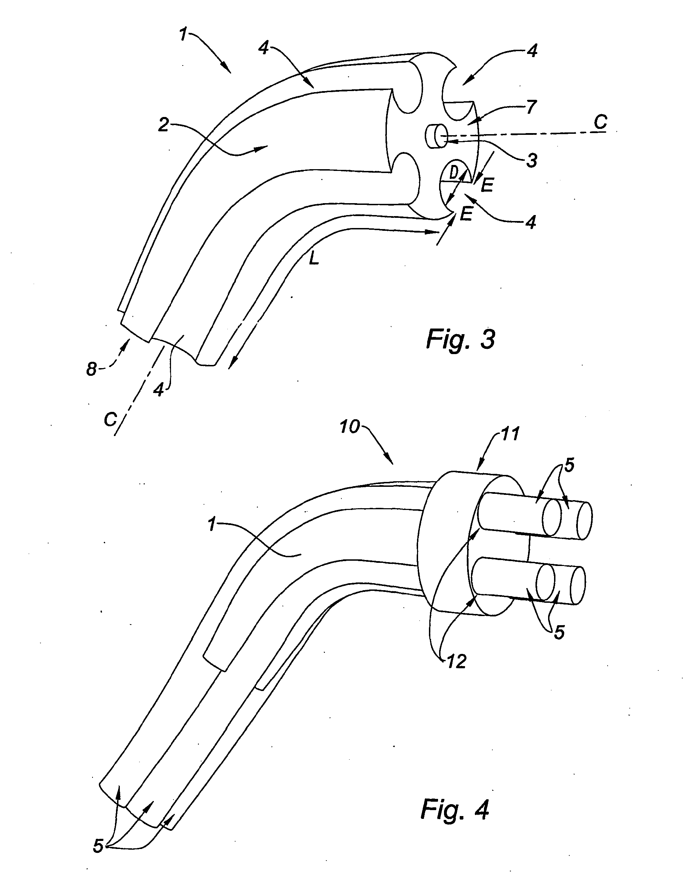

Les différentes pièces et les diverses étapes permettant de constituer un raccord coudé de câble électrique selon l'invention vont maintenant être détaillées en regard des figures 3 à 6.

Comme représenté sur la figure 3, le porteur central 1 se compose d'un jonc 2 relativement flexible dans lequel est disposée une tige de renfort 3 relativement rigide et pouvant être coudée.

Le jonc rainuré 2 est formé de préférence d'un matériau à base de silicone. Les silicones conviennent particulièrement à une telle réalisation en raison de leur propriétés de flexibilité et d'isolant électrique. En outre un silicone présente une facilité de moulage ou d'extrusion ce qui permet de réaliser aisément une forme cylindrique creusée de gorges 4 apte à recevoir, à envelopper et à épouser la forme des fils 5. De préférence le jonc est composé d'un silicone fluoré, l'adjonction de fluor permettant aux matières silicones de résister aux fluides aéronautiques, tels que le kérosène, les huiles ou les fluides de commande hydraulique ("skydroll").

De façon avantageuse, un tel jonc silicone est apte à protéger les fils électriques 5 des chocs mécaniques, de l'écrasement, d'un cisaillement, de l'usure par pliure du fil ou par friction (en anglais "fretting") et de façon générale contre leur détérioration.

La tige de renfort 3 est formée de préférence d'une tige métallique flexible. La tige peut être réalisée notamment, à titre d'exemple indicatif et non-limitatif, d'acier flexible, non trempé, d'acier inoxydable (par exemple Inox AISI 300 aux normes aéronautiques), d'aluminium, de titane etc..

La tige 3 peut être insérée à l'intérieur du jonc 2 avant courbure ou bien être disposée déjà coudée dans un moule avant infection du matériau à base de silicone pour être moulée directement à l'intérieur du jonc 2.

Les régions externes à la périphérie du jonc 2 sont creusées de gorges 4 rainurées s'étendant dans la direction L longitudinale du jonc.

Le jonc 2 peut avoir une forme sensiblement cylindrique, avant d'être coudé, avec une section sensiblement constante obtenue par exemple par extrusion ou, de préférence, une section décroissante (allure légèrement conique) obtenue par exemple par moulage.

Une section décroissante permet avantageusement d'avoir une première extrémité 7, orientée vers un raccordement de connexion électrique, de section supérieure à une seconde extrémité 8 affectée à la sortie du câblage 6, c'est-à-dire à la sortie de faisceau de fils électriques 5.

Au niveau de la première extrémité 7, les gorges rainurées 4 et donc les fils électriques 5 sont écartés les uns par rapport aux autres, ce qui facilite leur connexion tout en maintenant une bonne distance d'isolation électrique, nécessaire en particulier pour des connexions électriques de puissance.

Au niveau de la seconde extrémité 8, les gorges 4 convergent et se rejoignent, ce qui permet avantageusement de former un faisceau 6 de fils 5 étroitement serrés à cette seconde extrémité 8 de sortie du câblage 6. De préférence, les gorges convergent à la seconde extrémité en restant séparées par une faible distance, comme visible sur la figure 1 pour le passage de la tige 3. Au niveau de la seconde extrémité 8, les fonds des gorges rainurées 4 peuvent être quasiment en contact tangentiellement entre-elles et/ou avec la tige de renfort 3, comme visible sur la figure 1, tandis qu'à la première extrémité 7, les gorges 4 sont espacées par rapport aux gorges voisines et par rapport à la tige 3 de renfort centrale.

Dans l'exemple de réalisation des figures 1 à 6, le jonc 2 de section légèrement décroissante est tronqué à la longueur L nécessaire pour assurer un renvoi coudé des fils électriques 5 avec un niveau de courbure C acceptable.

Sur les figures 1 à 6, le jonc 2 comporte des rainures 4 incurvées inscrites dans un plan et parallèles à la courbe C axiale directrice du jonc 2 matérialisée par la tige 3 de renfort incurvée.

Alternativement, les gorges peuvent s'enrouler en hélices torsadées (non représenté) se développant suivant la direction du jonc et imbriquées entre-elles, ce qui permet d'initier un toronnage des fils électriques.

La section transversale des gorges est de préférence en arc de cercle, ce qui permet avantageusement d'insérer aisément et d'envelopper parfaitement des fils 5 de section circulaire en les immobilisant.

Comme illustré sur la figure 4, chacun des fils électriques 5 est inséré dans le porteur central 1 par la fente d'ouverture extérieure d'une gorge 4 et vient se loger à l'intérieur de la gorge 4.

Les gorges 4 présentent avantageusement, à la surface du jonc 2, une ouverture de largeur E inférieure à leur diamètre D (ou à la dimension transversale maximum de la gorge), ce qui permet de maintenir les fils 5 à l'intérieur.

La figure 4 montre en outre que pour maintenir les fils 5 immobilisés dans les gorges 4, il est prévu de rapporter un barillet 11 comportant des logements de câble aménagés parallèlement à l'axe dans le prolongement des gorges. Dans l'exemple de la figure 4, le barillet 11 est réalisé simplement sous forme d'un disque ou plus généralement d'un élément cylindrique, percé de trous 12 parallèles à l'axe de l'élément 11 et disposés à des positions correspondant au prolongement des gorges 4 du jonc rainuré 2 du porteur central 1 du raccord coudé 10 selon l'invention. Alternativement le barillet peut prendre la forme d'une roue ou d'une pièce en forme d'étoile qui comporte un moyeu central et des bras rayonnant autour d'évidements en forme de berceau (forme concave arrondie en creux, en hémicycle, en portion de cercle ou de cylindre) pour loger les câbles parallèlement à l'axe.

La partie axiale du barillet comporte avantageusement un trou axial lisse ou de préférence fileté (non-illustré), pour fixer et ancrer la tige de renfort axial. Ce point de fixation permet de tenir la tige, de l'immobiliser définitivement dans sa position angulaire de renvoi coudé et de maintenir le câble dans cette position.

Le barillet peut être réalisé en acier, notamment en acier inoxydable, en aluminium, en titane, en cuivre ou alternativement en plastique thermodurcissable, notamment en PolyEtherEtherCetone (PEEK).

Selon l'illustration de la figure 4, cet élément cylindrique 11, de forme analogue à un barillet ou à une filière, est rapporté à l'extrémité 7 du porteur rainuré 1 et enfilé sur les fils 5 du câble électrique 6, chaque fil 5 passant au travers d'un trou 12 correspondant.

De façon avantageuse, les trous 12 de l'élément cylindrique 11 maintiennent les fils 5 immobilisés et les empêchent de s'extraire des gorges 4 du porteur rainuré 1. La figure 4 montre la disposition de l'élément cylindrique 11 évidé pour passer les fils 5 dans le prolongement du porteur rainuré 1 du raccord 10 selon l'invention. Une telle disposition permet de combiner avantageusement une insertion radiale des fils 5 dans les gorges 4 avec une immobilisation des fils 5 par translation axiale de l'élément cylindrique 11, ce qui permet à cet ensemble d'assurer à lui-seul l'immobilisation des fils 5 sans faire appel au gainage externe 20.

Alternativement ou cumulativement, les fils 5 peuvent être maintenu dans les gorges 4 par une bague annulaire (non représentée) de diamètre supérieur au jonc 2 que l'on fait coulisser sur le porteur central 1 après insertion des fils 5 de câblage électrique pour les ceinturer.

L'ensemble 10 formé par le porteur central 1 contenant les fils 5 de câblage électrique 4 peut notamment être revêtu d'une tresse 21 de blindage et/ou de renfort avant d'engager une telle bague pour maintenir la tresse 21.

La figure 5 montre une réalisation dans lequel le raccord coudé est muni d'une pièce 13 de raccordement mécanique de forme tubulaire. La pièce 13 est engagée sur l'ensemble 10 formé par le porteur central 1 et l'élément cylindrique 11 percé dans lesquels sont insérés les fils électriques 5.

La pièce 13 de raccordement mécanique est de préférence réalisée en matériau métallique pour faire la jonction entre la tresse de blindage et une paroi cylindrique externe métallique de connecteur reliée à la masse.

Comme illustré sur les figures 5 et 6, la pièce 13 de raccordement mécanique est de préférence circulaire et/ou cylindrique, au moins en partie. La pièce de raccordement 13 comporte avantageusement un filetage interne ou externe, ou un autre moyen d'assemblage (baïonnette, etc.).

La pièce de raccordement 13 permet avantageusement de solidariser le raccord coudé 10 avec une gaine ou un manchon de gainage externe. Elle peut permettre aussi de fixer le raccord 10 selon l'invention, sur un connecteur ou sur une embase pour former une prise électrique ou une connexion électrique complète.

Pour immobiliser définitivement toutes les pièces du raccord 10 (en rotation et en translation) et assurer l'isolation électrique complète du raccord coudé selon l'invention, celui-ci est de préférence revêtu d'un gainage externe isolant, notamment en matériau polymère synthétique.

Le gainage externe 20 peut comporter une ou plusieurs couches de gainage 21,22, ainsi qu'éventuellement, un manchon de gainage 23.

Selon l'exemple visible sur la figure 2, une gaine 22 recouvre le faisceau 6 de fils 5 du câble électrique issu de la seconde extrémité 8 de sortie de câblage à l'opposé de la première extrémité 7 où s'effectue le raccordement mécanique ainsi que les connexions électriques. Le faisceau de fils électriques 5 du câble 6 peut être noyé dans une ou plusieurs couches de gainage 22 déposée par extrusion ou être pris dans une gaine tubulaire 22 thermo-rétractable.

Une telle gaine 22 peut recouvrir seulement le faisceau 6 de fils électriques 5 (toronnés ou non) comme illustré figure 2 et/ou englober l'ensemble des éléments 1 à 6 du raccord coudé 10 selon l'invention. La gaine 22 peut être formée notamment d'une ou de plusieurs couches de gainage armé, tressé ou sur-tressé.

L'ensemble des éléments du raccord coudé 10 (porteur rainuré 1, fils 5/ barillet cylindrique 11 évidé / bague / pièce de raccordement 13 et gaine 22, optionnellement) est de préférence enserré dans un manchon 23 de gainage externe.

Le manchon de gainage 23 peut laisser la pièce 13 de raccordement mécanique libre en rotation. De préférence, le manchon de gainage 23 est un manchon thermo-rétractable. Le manchon 23 est enfilé sur le câble 6 avant d'assembler les éléments 1 à 5 du raccord coudé selon l'invention et de visser la pièce 13 de raccordement filetée. Le manchon 23 de gainage est rétracté à la chaleur après avoir disposé les fils électriques 5 avec tous les éléments du raccord coudé 10 et notamment après avoir vissé la pièce 13 de raccordement mécanique.

Ainsi, de façon avantageuse, tous les éléments 1 à 13 du raccord coudé 10, notamment les fils 5 du câble électrique 6 et la pièce 13 de raccordement mécanique, sont complètement immobilisés en rotation et en translation axiale.

Avantageusement, le gainage 20 assure une protection mécanique contre l'usure et les détériorations.

Plus généralement, la structure de raccord coudé 10 à jonc flexible 2 central selon l'invention, permet d'obtenir une protection contre les chocs mécaniques et notamment contre un écrasement ou un cisaillement du câble électrique, tout en assurant une courbure C progressive et régulière des fils électriques 5 prévenant leur coupure et l'interruption de la liaison électrique.

Avantageusement, la tige 3 de renfort métallique coudée du porteur central 1 donne un point d'ancrage et de la rigidité au porteur central, ce qui fixe l'orientation C des fils électriques 5.

L'intérêt essentiel de l'invention est de garantir la viabilité de l'angle d'orientation des fils 5 du câble électrique 6 en sortie du raccord coudé 10, que le gainage ne peut pas assurer à lui seul, surtout dans des câbles électriques 6 de puissance comprenant plusieurs fils 5 d'alimentation de forte section.

L'invention s'applique particulièrement bien à la pose de câblages électriques de puissance dans des espaces restreints dans lesquels les câbles 6 doivent se plier à de brusques changements de direction, parfois immédiatement en sortie de prises de raccordement, tout en les protégeant complètement d'éventuelles détériorations.

L'invention s'applique en particulier à la réalisation de câblage d'alimentation de puissance à l'intérieur d'appareils aéronautiques, tels que les câbles d'alimentation des équipements électriques des moteurs ou les harnais de puissance des inverseurs de poussée des turbomoteurs.

## Revendications

1. Raccord coudé (10) pour câble électrique (6) à plusieurs fils (5), comportant un porteur central rainuré (1) longitudinal (L), composé d'un jonc flexible (2), **caracterisé en ce qu'**il comporte plusieurs gorges (4) longitudinales espacées circonférentiellement à la surface du jonc, et une tige de renfort (3) disposée axialement au coeur du jonc (2) et apte à être coudée.

2. Raccord coudé selon la revendication 1, dans lequel la tige de renfort (3) est une tige métallique rigide.

3. Raccord coudé selon la revendication 1 ou 2, dans lequel le jonc (2) est en matériau à base de silicone.

4. Raccord coudé selon l'une des revendications 1 à 3 dans lequel le jonc (2) est de géométrie sensiblement cylindrique suivant la direction longitudinale (C, L).

5. Raccord coudé selon l'une des revendications 1 à 4, dans lequel le jonc (2) est à section (7,8) légèrement décroissante longitudinalement.

6. Raccord coudé selon l'une des revendications 1 à 5, dans lequel chaque gorge (4) a une section transversale en arc de cercle de diamètre (D).

7. Raccord coudé selon la revendication 6, dans lequel chaque gorge (4) présente, à la surface du jonc 2, une ouverture de largeur (E) inférieure au diamètre (D) de la gorge (4).

8. Raccord coudé selon l'une des revendications 1 à 7, comprenant en outre des éléments (11,13,20) de maintien périphérique de fils dans lesdites gorges (4).

9. Raccord coudé selon la revendication 8, dans lequel les éléments de maintien des fils comprennent un barillet (11) comportant plusieurs logements (12) aménagés parallèlement à l'axe (C) et correspondant, respectivement, au prolongement des gorges (4) du jonc (2).

10. Raccord coudé selon la revendication 8 ou 9, dans lequel la partie axiale du barillet (11) comporte un trou d'ancrage de la tige de renfort (3).

11. Raccord coudé selon la revendication 10, dans lequel le trou axial du barillet et/ou la tige de renfort (3) présente un ou des filetages.

12. Raccord coudé selon l'une des revendications 8 à 11, dans lequel les éléments de maintien des fils comprennent une bague annulaire de diamètre supérieur au jonc.

13. Raccord coudé selon l'une des revendications 8 à 12, dans lequel les éléments (20) de maintien des fils comprennent au moins une tresse de blindage (21).

14. Raccord coudé selon l'une des revendications 8 à 13, dans lequel les éléments (20) de maintien des fils comprennent au moins une couche de gainage (21) périphérique déposée sur les fils.

15. Raccord coudé selon l'une des revendications 8 à 14, dans lequel les éléments (20) de maintien des fils comprennent un manchon (23) de gainage externe.

16. Raccord coudé selon la revendications 14 ou 15, dans lequel le gainage (20, 21, 22, 23) est thermo-rétractable.

17. Raccord coudé selon l'une des revendications 1 à 16, comprenant une pièce (13) de raccordement mécanique.

18. Connecteur pour câble électrique, **caractérisé en ce qu'**il est muni d'un raccord coudé selon l'une des revendications précédentes.

19. Câble électrique, **caractérisé en ce qu'**il comporte au moins un raccord coudé selon l'une des revendications 1 à 17.

20. Harnais de câblage électrique **caractérisé en ce qu'**il comporte au moins un raccord coudé selon l'une des revendications 1 à 17.

## Claims

1. Elbow connection (10) for an electric cable (6) with several wires (5), comprising a longitudinal (L) fluted central carrier (1), made up of a flexible stem (2), **characterized in that** it comprises several longitudinal recesses (4) spaced circumferentially on the surface of the stem and a strengthening rod (3) arranged axially at the core of the stem (2) and suitable for being bent.

2. Elbow connection according to Claim 1, in which the strengthening rod (3) is a rigid metal rod.

3. Elbow connection according to Claim 1 or 2, in which the stem (2) is made of a silicone based material.

4. Elbow connection according to one of Claims 1 to 3, in which the stem (2) is of substantially cylindrical geometry in the longitudinal direction (C, L).

5. Elbow connection according to one of Claims 1 to 3, in which the stem (2) is of slightly decreasing section (7, 8) longitudinally.

6. Elbow connection according to one of Claims 1 to 5, in which each recess (4) has a cross section in an arc of a circle of diameter (D).

7. Elbow connection according to Claim 6, in which each recess (4) has, on the surface of the stem 2, an opening of width (E) smaller than the diameter (D) of the recess (4).

8. Elbow connection according to one of Claims 1 to 7, further comprising elements (11, 13, 20) for peripheral holding of wires in the said recesses (4).

9. Elbow connection according to Claim 8, in which the wire holding elements include a barrel (11) comprising several housings (12) formed parallel with the centre-line (C) and corresponding to the extension of the recesses (4), respectively, of the stem (2).

10. Elbow connection according to Claim 8 or 9, in which the axial part of the barrel (11) comprises a hole for anchoring the strengthening rod (3).

11. Elbow connection according to Claim 10, in which the axial hole of the barrel and/or the strengthening rod (3) has a screw thread or screw threads.

12. Elbow connection according to one of Claims 8 to 11, in which the wire holding elements comprise an annular ring of a diameter greater than the stem.

13. Elbow connection according to one of Claims 8 to 12, in which the wire holding elements (20) comprise at least one shielding braid (21).

14. Elbow connection according to one of Claims 8 to 13, in which the wire holding elements (20) comprise at least one layer of peripheral sheathing (21) laid on the wires.

15. Elbow connection according to one of Claims 8 to 14, in which the wire holding elements (20) comprise an external sheathing sleeve (23).

16. Elbow connection according to Claim 14 or 15, in which the sheathing (20, 21, 22, 23) is heat shrinkable.

17. Elbow connection according to one of Claims 1 to 16, comprising a mechanical coupling part (13).

18. Connector for an electric cable, **characterized in that** it is provided with an elbow connection according to one of the preceding claims.

19. Electric cable, **characterized in that** it comprises at least one elbow connection according to one of Claims 1 to 17.

20. Electric cabling harness **characterized in that** it comprises at least one elbow connection according to one of Claims 1 to 17.

## Patentansprüche

1. Winkelverbindungsstück (10) für ein elektrisches Kabel (6) mit mehreren Adern (5), umfassend einen in Längsrichtung verlaufenden (L), genuteten mittleren Träger (1), der aus einem flexiblen Rohr (2) besteht, **dadurch gekennzeichnet, daß** es mehrere in Umfangsrichtung beabstandete Längsnuten (4) an der Oberfläche des Rohrs sowie eine Verstärkungsstange (3), die im Inneren des Rohrs (2) axial angeordnet und geeignet ist, gebogen zu werden, umfaßt.

2. Winkelverbindungsstück nach Anspruch 1, wobei die Verstärkungsstange (3) eine starre Metallstange ist.

3. Winkelverbindungsstück nach Anspruch 1 oder 2, wobei das Rohr (2) aus silikonbasiertem Material besteht.

4. Winkelverbindungsstück nach einem der Ansprüche 1 bis 3, wobei das Rohr (2) eine im wesentlichen zylindrische Geometrie in Längsrichtung (C, L) aufweist.

5. Winkelverbindungsstück nach einem der Ansprüche 1 bis 4, wobei das Rohr (2) einen in Längsrichtung leicht abnehmenden Querschnitt (7, 8) aufweist.

6. Winkelverbindungsstück nach einem der Ansprüche 1 bis 5, wobei jede Nut (4) einen kreisbogenförmigen Querschnitt mit dem Durchmesser (D) aufweist.

7. Winkelverbindungsstück nach Anspruch 6, wobei jede Nut (4) an der Oberfläche des Rohrs (2) eine Öffnung mit einer Breite (E), die kleiner als der Durchmesser (D) der Nut (4) ist, aufweist.

8. Winkelverbindungsstück nach einem der Ansprüche 1 bis 7, ferner umfassend Elemente (11, 13, 20) zum umfangseitigen Halten von Adern in den Nuten (4).

9. Winkelverbindungsstück nach Anspruch 8, wobei die Elemente zum Halten der Adern eine Trommel (11) umfassen, die mehrere Aufnahmen (12) aufweist, welche parallel zur Achse (C) angeordnet sind und jeweils der Verlängerung der Nuten (4) des Rohrs (2) entsprechen.

10. Winkelverbindungsstück nach Anspruch 8 oder 9, wobei der axiale Teil der Trommel (11) ein Loch zur Verankerung der Verstärkungsstange (3) umfaßt.

11. Winkelverbindungsstück nach Anspruch 10, wobei das axiale Loch der Trommel und/oder die Verstärkungsstange (3) ein oder mehrere Gewinde aufweist.

12. Winkelverbindungsstück nach einem der Ansprüche 8 bis 11, wobei die Elemente zum Halten der Adern eine ringförmige Hülse mit größerem Durchmesser als das Rohr umfassen.

13. Winkelverbindungsstück nach einem der Ansprüche 8 bis 12, wobei die Elemente (20) zum Halten der Adern wenigstens ein Abschirmungsgeflecht (21) umfassen.

14. Winkelverbindungsstück nach einem der Ansprüche 8 bis 13, wobei die Elemente (20) zum Halten der Adern wenigstens eine auf den Adern abgeschiedene Umfangshüllschicht (21) umfassen.

15. Winkelverbindungsstück nach einem der Ansprüche 8 bis 14, wobei die Elemente (20) zum Halten der Adern eine äußere Hüllmanschette (23) umfassen.

16. Winkelverbindungsstück nach Anspruch 14 oder 15, wobei die Ummantelung (20, 21, 22, 23) wärmeschrumpfbar ist.

17. Winkelverbindungsstück nach einem der Ansprüche 1 bis 16, umfassend ein Teil (13) zur mechanischen Verbindung.

18. Verbinder für elektrisches Kabel, **dadurch gekennzeichnet, daß** er mit einem Winkelverbindungsstück nach einem der vorhergehenden Ansprüche ausgestattet ist.

19. Elektrisches Kabel, **dadurch gekennzeichnet, daß** es wenigstens ein Winkelverbindungsstück nach einem der Ansprüche 1 bis 17 umfaßt.

20. Kabelbaum zur elektrischen Verkabelung, **dadurch gekennzeichnet, daß** er wenigstens ein Winkelverbindungsstück nach einem der Ansprüche 1 bis 17 umfaßt.
